# EUROPEAN PATENT APPLICATION

(11) **EP 3 327 647 A1**
(43) Date of publication of application: **30.05.2018**
(21) Application number: 17203452.2
(22) Date of filing: 24.11.2017
(51) Int. Cl.: G06Q 20/20, G06Q 30/02

(54) **SETTLEMENT APPARATUS AND METHOD FOR PROCESSING SETTLEMENT AMOUNT WITH POINTS BY THE SAME**

(30) Priority: 25.11.2016 JP 2016228941
(71) Applicant: Toshiba TEC Kabushiki Kaisha, Tokyo 141-8562 (JP)
(72) Inventor: GOTANDA, Tsuyoshi, Shinagawa-ku,, Tokyo 141-8562 (JP); NAKAJIMA, Takashi, Shinagawa-ku,, Tokyo 141-8562 (JP); SUSAKI, Akiko, Shinagawa-ku,, Tokyo 141-8562 (JP)
(74) Representative: Takeuchi, Maya

(57) **Abstract**

A settlement apparatus of an embodiment includes a determination module, a subtraction module, and a processing module. In response to a single operation on an instruction object, the determination module determines an amount of money to be deducted from the settlement amount for one transaction based on a rule previously associated with the instruction object. The deduction module deducts the amount of money determined by the determination module from the settlement amount. The processing module performs processing for subtracting number of points corresponding to the amount of money to be deducted from accumulated points indicating number of points available by a shopper

## Description

### FIELD

The present invention relates to the technologies in the field of point-of-service system in general, and embodiments described herein relate in particular to a settlement apparatus and a method for processing a settlement amount with points in the settlement apparatus.

### BACKGROUND

In a well-known point service system, a number of points corresponding to a settlement amount is calculated within an accumulated points when the settlement processing is performed through the point service. In order to arbitrarily specify the number of points allotted to the settlement, in a settlement apparatus of the related art, the number of points to be used or the amount of payment to be deducted is input through a numerical operation with a ten-keys or the like. However, when inputting the number of points or the amount of payment by the numerical operation, an operator has to operate buttons of the ten-keys at least the number of times corresponding to the number of digits of the amount, which is troublesome. Also, the amount of payment is often an amount of money corresponding to all or within available points accumulated or a fraction such as the last one digit or the last two digits of the settlement amount. When subtracting the amount of money corresponding to all available points or the fraction, the operator needs to first confirm the number of available accumulated points and the settlement amount and then operate the ten-keys in accordance with the confirmation result. Such operation is very troublesome for the operator.

To solve such problems, there is provided a settlement apparatus comprising:
a determination module configured to determine an amount of money to be deducted from a settlement amount for one transaction based on a rule previously associated with an instruction object in response to a single operation on the instruction object;
a deduction module configured to deduct the deducted amount determined by the determination module from the settlement amount; and
a processing module configured to perform processing for subtracting a number of points corresponding to the deducted amount from accumulated points indicating a number of points available by a person for settlement.

Preferably, the instruction object is an object to be operated by an operator before the settlement amount is determined.

Preferably still, the rule indicates that the deducted amount is set to a fraction having a predetermined number of digits of the settlement amount.

Preferably yet, the rule indicates that the deducted amount is set to the same amount as the settlement amount.

Suitably, the instruction object is a touch-instruction button displayed on a touch panel and the touch-instruction button is operated by a store clerk.

Suitably still, the apparatus comprises a touch panel which displays a "declaration" button operated by the person for settlement,
wherein the determination module invalidates an operation on an "instruction" button which is different from the declaration until the "declaration" button is operated.
Suitably yet, the apparatus is a face-to-face point of sale terminal.

Typically, the apparatus is a self-service point of sale terminal.

Typically yet, the apparatus is connected to a registration apparatus through a network.

The invention further relates to a method for processing a settlement amount with points, comprising:
determining an amount of money to be deducted from the settlement amount for one transaction based on a rule previously associated with an instruction object in response to a single operation on the instruction object;
deducting the deducted amount determined in the determining from the settlement amount; and
performing processing for subtracting a number of points corresponding to the deducted amount determined in the determining from accumulated points indicating a number of points available by a person for settlement.

Preferably, the instruction object is an object to be operated by an operator before the settlement amount is determined.

Preferably still, the rule indicates that the deducted amount is set to a fraction having a predetermined number of digits of the settlement amount.

Preferably yet, the rule indicates that the deducted amount is set to the same amount as the settlement amount.

Preferably further, the instruction object is displayed and operated by a store clerk.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating a main circuit configuration of a POS terminal, a network, and a server according to an embodiment;
FIG. 2 is a flowchart of control processing by a CPU of the POS terminal in FIG. 1;
FIG. 3 is a flowchart of the control processing successive to that in FIG. 2;
FIG. 4 is a diagram illustrating an example of an image displayed on a screen of a touch panel for customer in FIG. 1; and
FIG. 5 is a diagram illustrating an example of an image displayed on a screen of a touch panel for store clerk in FIG. 1.

### DETAILED DESCRIPTION

A settlement apparatus includes a determination module, a deduction module, and a processing module. In response to a single operation on an instruction object, the determination unit determines an amount of money to be deducted from a settlement amount for one transaction based on a rule previously associated with the instruction object. The deduction module deducts the amount of money determined by the determination module from the settlement amount. The processing module performs processing for subtracting number of points corresponding to the amount of money determined by the determination module from accumulated points indicating number of points available by a person for settlement.

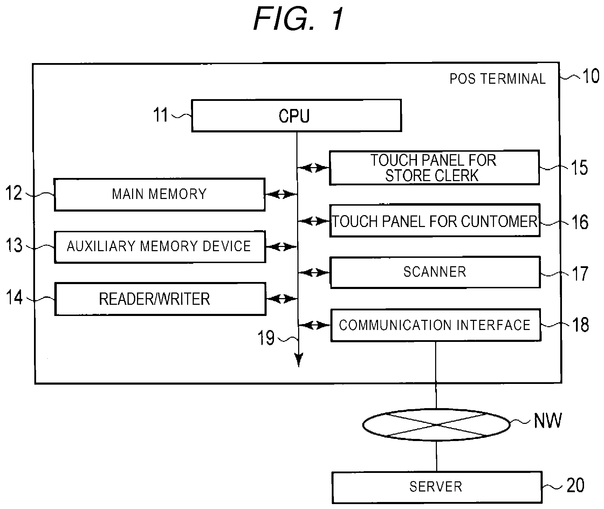

Hereinafter, a POS (Point Of Sales) terminal according to an embodiment is described with reference to the accompanying drawings. FIG. 1 is a block diagram illustrating a main circuit configuration of the POS terminal 10, a network NW, and a server 20 according to the embodiment. As an example, the POS terminal 10 is operated by an operator (store clerk) in a face-to-face method. The POS terminal 10 is connected to the network NW. The network NW is typically the Internet. The server 20 is connected to the network NW. The POS terminal 10 includes a CPU (Central Processing Unit) 11, a main memory 12, an auxiliary storage device 13, a reader/writer 14, a touch panel for store clerk 15, a touch panel for customer 16, a scanner 17, a communication interface 18, and a bus 19. The POS terminal 10 is an example of a settlement apparatus.

The CPU 11 acts as a central unit of a computer which performs processing and control necessary for the operation of the POS terminal 10. The CPU 11 controls each unit of the POS terminal 10 to realize various functions of the POS terminal 10 according to a program such as an operating system and application software stored in the main memory 12.

The main memory 12 corresponds to a main storage part of the computer. The main memory 12 stores programs such as an operating system and application software. The main memory 12 also stores data to be referred to when the CPU 11 performs various processing. Further, the main memory 12 is used as a so-called work area for storing data temporarily used by the CPU 11 when performing various processing.

The auxiliary storage device 13 corresponds to an auxiliary storage part of the computer. The auxiliary storage device 13 is, for example, an EEPROM (Electric Erasable Programmable Read-Only Memory), an HDD (Hard Disc Drive), an SSD (Solid State Drive), or the like. The auxiliary storage device 13 stores data used by the CPU 11 to perform various processing, data generated in the processing by the CPU 11, or the like. The auxiliary storage device 13 may also store a program such as the above-described operating system or application programs. In addition, the auxiliary storage device 13 also stores a commodity list in which commodities registered as a purchased commodity are described. Alternatively, the main memory 12 may store the commodity list. The auxiliary storage device 13 also stores a commodity database including various information such as a commodity code, a commodity name, and an unit price of the commodities sold at a store.

The program stored in the main memory 12 or the auxiliary storage device 13 includes a control program described with respect to a control processing to be described later. As an example, the POS terminal 10 is transferred to a user in a state in which the control program is stored in the main memory 12 or the auxiliary storage device 13. However, the POS terminal 10 may be transferred to the user in a state in which the control program is not stored in the main memory 12 or the auxiliary storage device 13. Further, the POS terminal 10 may be transferred to the user in a state in which another control program is stored in the main memory 12 or the auxiliary storage device 13. The control program described with respect to the control processing may be separately transferred to the user and may be written to the main memory 12 or the auxiliary storage device 13 through the operation of the user or a service person or staff. The transfer of the control program can be realized by recording the program on a removable recording medium such as a magnetic disk, a magneto-optical disk, an optical disk, or a semiconductor memory, or by downloading the program via a network.

The reader/writer 14 reads data from a magnetic card (magnetic stripe card), a contact type IC (Integrated Circuit) card, a non-contact type IC card, or the like. Alternatively, the reader/writer 14 reads data from a non-contact type IC chip mounted on an electronic device (for example, a mobile phone, a smartphone, a tablet PC (Personal Computer) or the like). The reader/writer 14 reads data stored in a point card, using this function. In addition, the reader/writer 14 rewrites the data stored in the point card, or writes data in the point card.

The touch panel for store clerk 15 functions as a display device for displaying a screen for notifying various information to a store clerk who is an operator of the POS terminal 10. Further, the touch panel for store clerk 15 functions as an input device for receiving a touch operation by the operator.

The touch panel for customer 16 functions as a display device for displaying a screen for notifying various information to a shopper (customer). In addition, the touch panel for customer 16 functions as an input device for receiving a touch operation by the shopper.

The scanner 17 reads a barcode attached to a commodity or the like and outputs the commodity code represented by the barcode. The scanner 17 may be of a handy type or a fixed type mounted on a checkout table.

The communication interface 18 is an interface through which the POS terminal 10 communicates with an external device via the network NW.

The bus 19 includes an address bus, a data bus, and the like, to transmit signals exchanged by each unit of the POS terminal 10.

The server 20 may store remainder of points (accumulated points) of the point card. The server 20 may use an existing server.

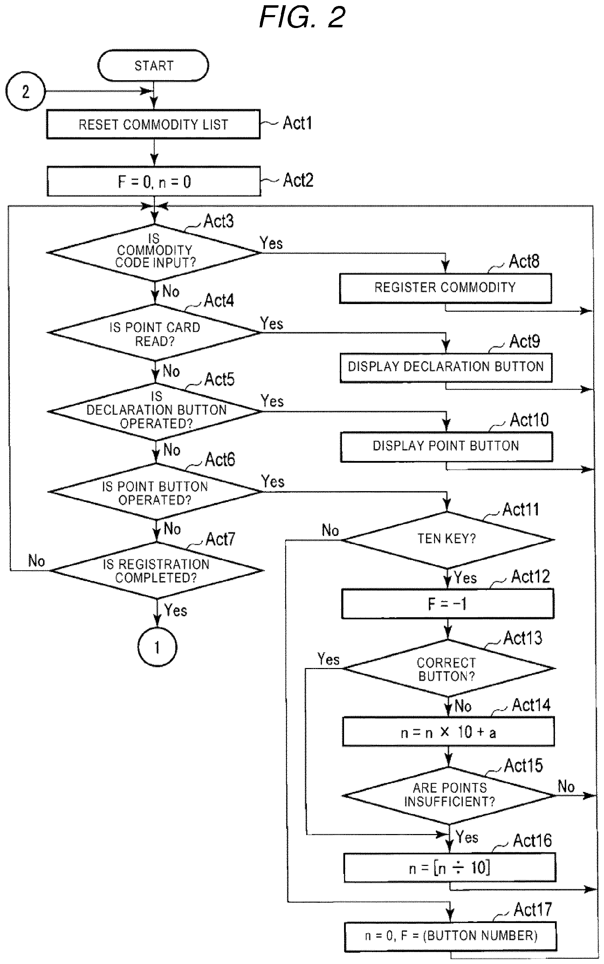

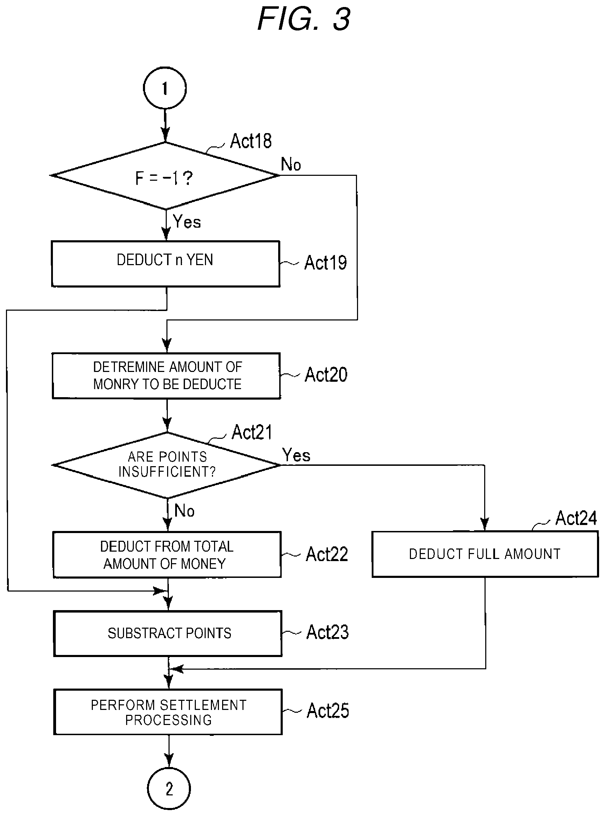

Hereinafter, the operation of the POS terminal 10 according to the present embodiment is described with reference to FIG. 2. The contents of the processing in the following description in operation are mere examples, and various processing capable of achieving the same result may be appropriately applied. FIGS. 2 and 3 are flowcharts of the control processing by the CPU 11 of the POS terminal 10. The CPU 11 executes the control processing according to the control program stored in the main memory 12 or the auxiliary storage device 13. When starting the control processing shown in FIGS. 2 and 3, the CPU 11 assigns a variable F and a variable n to the main memory 12.

In Act 1 of FIG. 2, the CPU 11 of the POS terminal 10 resets the commodity list stored in the main memory 12 or the auxiliary storage device 13. In other words, the CPU 11 instructs the main memory 12 or the auxiliary storage device 13 that the commodity list is set to a state in which no commodities are written therein. In Act 2, the CPU 11 sets 0 in the variables F and n to initialize both variables F and N.

In Act 3, the CPU 11 confirms whether or not the commodity code is input. The commodity code is input to the CPU 11 as an example as shown below. The operator of the POS terminal 10 operates the scanner 17 to read the barcode attached to the commodity. As a result, the commodity code represented with the barcode is input to the CPU 11. If the commodity code is not input, the CPU 11 determines that No is taken in Act 3 and then executes processing in Act 4.

In Act 4, the CPU 11 confirms whether or not data stored in the point card is read by the reader/writer 14. If the data stored in the point card is not read, the CPU 11 determines that No is taken in Act 4 and then executes processing in Act 5.

In Act 5, the CPU 11 confirms whether or not a "declaration" button, described later, is operated. If the "declaration" button is not operated, the CPU 11 determines that No is taken in Act 5 and executes processing in Act 6.

In Act 6, the CPU 11 confirms whether or not a "point" button, described later, is operated. If the "point" button is not operated, the CPU 11 determines that No is taken in Act 6 and executes processing in Act 7.

In ACT 7, the CPU 11 confirms whether or not an operation for completing the registration of the commodity is performed. The CPU 11 confirms whether or not a predetermined operation, such as touching a "subtotal" button displayed on the touch panel for store clerk 15, is performed. It is determined beforehand as an operation rule that an operation of instructing the completion of registration is performed after one or more of commodities are registered. The operation of the CPU 11 at the time the operation of instructing the completion of registration is performed in a state in which the commodity is not yet registered may be designed by a designer of the control program of the CPU 11. For example, the CPU 11 ignores the operation of instructing the completion of registration. Alternatively, in a state in which the commodity is not yet registered, the CPU 11 may set a state in which the operation itself of instructing the completion of registration cannot execute on the touch panel for store clerk 15. If the operation of instructing the completion of registration is not performed, the CPU 11 determines that No is taken in Act 7 and then returns to the processing in Act 3. Thus the CPU 11 repeats Act 3 to Act 7 until the commodity code is input, the data stored in the point card is read, the "declaration" button is operated, the "point" button is operated, or an operation of completing the registration of the commodity is performed.

The store clerk reads the barcode attached to the commodity subject to the settlement by the scanner 17 to input the commodity code of the commodity. If the commodity code is input in standby state in Act 3 to Act 7, the CPU 11 determines that Yes is taken in Act 3 and proceeds to the processing in Act 8. In Act 8, the CPU 11 adds the commodity code input of which is confirmed in Act 3 to the commodity list stored in the main memory 12 or the auxiliary storage device 13. After the processing in Act 8 is executed, the CPU 11 returns to the processing in Act 3.

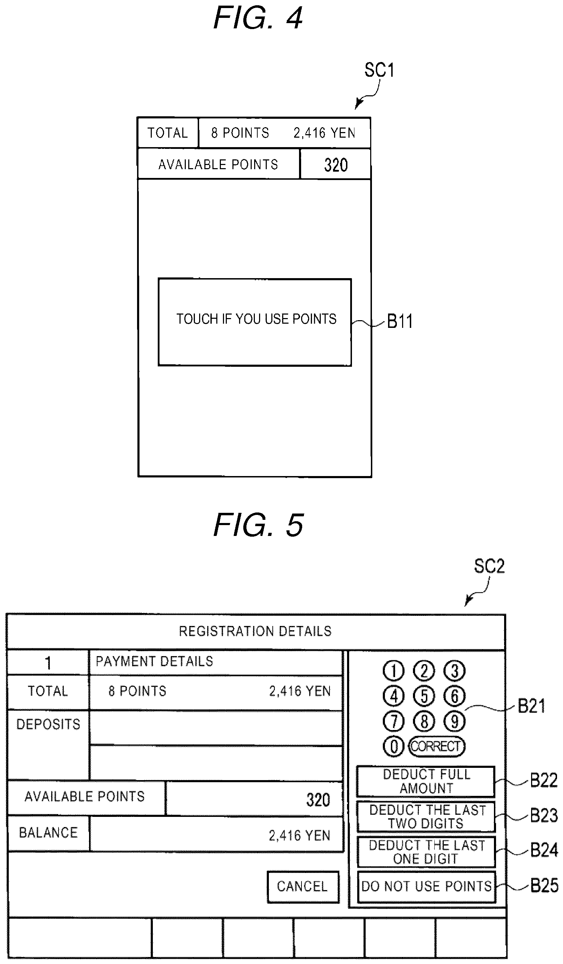

If the shopper wants to apply for the point service, for example, the shopper hands his or her point card over to the store clerk. Then, the store clerk operates the reader/writer 14 to read data in the point card. Alternatively, the shopper loads the point card into the reader/writer 14 by himself or herself to read data in the point card. If the data stored in the point card is read in the standby state in Act 3 to Act 7, the CPU 11 determines that Yes is taken in Act 4 and proceeds to processing in Act 9. In ACT 9, the CPU 11 displays the "declaration" button on the touch panel for store clerk 15 and the touch panel for customer 16. In order to display the "declaration" button on the touch panel for customer 16, the CPU 11 generates, an image corresponding to the screen for customer SC1 as shown in FIG. 4. Then, the CPU 11 instructs the touch panel for customer 16 to display the generated image. Upon receiving this instruction, the touch panel for customer 16 displays the screen for customer SC1 thereon.

FIG. 4 is a diagram showing an example of the screen for customer SC1. The screen for customer SC1 includes a "declaration" button B 11. The "declaration" button B11 is operated by the shopper if the shopper wants to use the points in the point card. For example, the "declaration" button B11 displays a character string such as "touch if you use points" to ask the shopper to touch the button B 11. In addition, the CPU 11 also displays the "declaration" button on the touch panel for store clerk 15. The CPU 11 generates an image corresponding to the screen including the "declaration" button. Then, the CPU 11 instructs the touch panel for store clerk 15 to display the generated image. Upon receiving this instruction, the touch panel for store clerk 15 displays the screen including the "declaration" button. After the processing in Act 9 is executed, the CPU 11 returns to the processing in Act 3.

If the shopper wants to use points, the shopper operates the "declaration" button B11 on the touch panel for customer 16. Alternatively, the shopper tells the store clerk that the shopper wants to use points. In response to the shopper's demand, the store clerk operates the "declaration" button displayed on the touch panel for store clerk 15. If the shopper does not want to use points, that is, want to collect or accumulate points, the shopper does not need to operate the "declaration" button B 11. Also, in this case, the store clerk does not operate the "declaration" button on the touch panel for store clerk 15. If the "declaration" button B11 or the "declaration" button on the touch panel for store clerk 15 is operated in the standby state in Act 3 to Act 7, the CPU 11 determines that Yes is taken in Act 5 and proceeds to processing in Act 10. As described above, the "declaration" button B11 or the "declaration" button on the touch panel for store clerk 15 is displayed by executing the processing in Act 9. Therefore, as long as the "declaration" button B11 or the "declaration" button on the touch panel for store clerk 15 is not displayed, the CPU 11 may skip the processing in Act 5 and proceed to the processing in Act 6. In Act 10, the CPU 11 displays the "point" button on the touch panel for store clerk 15. The CPU 11 generates an image corresponding to a screen for store clerk SC2 as shown in FIG. 5. Then, the CPU 11 instructs the touch panel for store clerk 15 to display the generated image. Upon receiving this instruction, the touch panel for store clerk 15 displays the screen for store clerk SC2.

FIG. 5 is a diagram illustrating an example of the screen for store clerk SC2. The screen for store clerk SC2 includes a ten-keys B21 and one-touch buttons B22 to B25. The ten-keys B21 is constituted by ten number buttons indicating numbers from 0 to 9, and a "correct" button. The ten-keys B21 is operated by the store clerk at the time the store clerk needs to perform processing of deducting an arbitrary amount of money from the settlement amount of the commodities subject to the settlement for one transaction and subtracting the number of points equivalent to the amount of money to be subtracted from the accumulated points in the point card. The one-touch button B22 is operated by the store clerk if the store clerk needs to perform processing called as a full amount deduction. If the settlement amount of the commodities subject to the settlement for one transaction is larger than the value obtained by converting all the accumulated points in the point card into an amount of money, the full amount deduction can be executed by deducting the value obtained by converting all accumulated points in the point card into an amount of money from the settlement amount and subtracting the number of points equivalent to the amount of money deducted from the accumulated points in the point card. That is, all the accumulated points in the point card are consumed. In addition, if the value obtained by converting all the accumulated points in the point card into an amount of money is equal to or greater than the settlement amount of the commodities for one transaction, the full amount deduction can also be executed by deducting the total amount from the settlement amount and subtracting the points equivalent to the total amount (settlement amount) from the accumulated points in the point card. That is, some of the accumulated points remains. The one-touch button B23 is operated by the store clerk if the store clerk needs to perform processing of deducting the amount of money equal to the fraction of the last two digits of the settlement amount from the settlement amount of the commodities subject to the settlement for one transaction and subtracting the number of points equivalent to the amount of money to be deducted from the accumulated points in the point card. The one-touch button B24 is operated by the store clerk if the store clerk needs to perform processing of deducting the amount of money equal to the fraction of the last one digit from the settlement amount of the commodities subject to the settlement for one transaction and subtracting the number of points equivalent to the deducted amount of money from the accumulated points in the point card. The one-touch button B25 is operated by the store clerk if the accumulated points are not used. In the present embodiment, one-touch buttons B22 to B25 are associated with button numbers respectively. For example, the button number of the one-touch button B22 is a number sufficiently larger than the number of digits of the maximum amount of money assumed as the settlement amount, for example, 99. The one-touch buttons B23 and B24 are button numbers according to the number of digits of the amount of money to be deducted. For example, the button number of the one-touch button B23 is "2", and the button number of the one-touch button B24 is "1". The button number of the one-touch button B25 is "0". The ten-keys B21 and the one-touch buttons B22 to B25 are collectively referred to as a "point" button. As described above, the "point" button is displayed at the time the "declaration" button B11 or the "declaration" button displayed on the touch panel for store clerk is operated. The processing in Act 10 is not performed until the "declaration" button B11 is operated. Therefore, the "declaration" button B11 is an example of a declaration object to be operated by the shopper. After the processing in Act 10 is executed, the CPU 11 returns to the processing in Act 3.

If the shopper wants to use the accumulated points, the shopper tells the store clerk number of points he or she wants to use or number of points corresponding to the amount of money he or she wants to use after operating the "declaration" button B11. In this case, the store clerk operates the "point" button in response to the request of the shopper. Alternatively, if the shopper wants to use points, the shopper tells the store clerk number of points he or she wants to use or number of points corresponding to the amount of money he or she wants to use without operating the "declaration" button B 11. In this case, the store clerk operates the "declaration" button displayed on the touch panel for store clerk 15 and then operates the "point" button in response to the request of the shopper. If the "point" button is operated in the standby state in Act 3 to Act 7, the CPU 11 determines that Yes is taken in Act 6 and proceeds to the processing in Act 11. As described above, the "point" button is displayed as the processing in Act 10 is performed. Therefore, while the "point" button is not displayed, the CPU 11 may proceed to Act 7 without performing the processing in ACT 6. In Act 11, the CPU 11 confirms whether or not the "point" button whose operation is detected in Act 6 is any one of the buttons constituting the ten-keys B21. If the "point" button whose operation is detected in Act 6 is one of the buttons constituting the ten-keys B21, the CPU 11 determines that Yes is taken in Act 11 and proceeds to processing in Act 12. In Act 12, the CPU 11 sets the value in the variable F to be "-1". The variable F indicates that the value input by the ten-keys is set as the amount of money to be deducted from the settlement amount if the value thereof is "-1".

In Act 13, the CPU 11 confirms that whether or not the "point" button whose operation is detected in Act 6 is the "correct" button. If the "point" button whose operation is detected in Act 6 is not the "correct button, that is, if the "point" button is a numeric button, the CPU 11 determines that No is taken in Act 13 and proceeds to processing in Act 14. In Act 14, the CPU 11 substitutes the value obtained by a calculation formula of (n × 10 + a) into the variable n. "a" is a value corresponding to an operated numeric button.

In Act15, the CPU 11 confirms whether or not the accumulated points in the point card are insufficient to execute the processing. If the value obtained by converting all the accumulated points in the point card into an amount of money is less than the value of the variable n, the CPU 11 determines that the accumulated points are insufficient. If the accumulated points in the point card are sufficient, the CPU 11 determines that No is taken in Act 15 and returns to the processing in Act 3.

On the other hand, if the "point" button whose operation is detected in Act 6 is the "correct" button, the CPU 11 determines that Yes is taken in Act 13 and proceeds to processing in Act 16. In addition, if the accumulated points in the point card are insufficient to execute the processing, the CPU 11 determines that Yes is taken in Act 15 and proceeds to the processing in Act 16. In Act 16, the CPU 11 substitutes the value obtained by a calculation formula of (n ÷ 10) and by cutting off after the decimal point for the variable n. After the processing Act 16 is executed, the CPU 11 returns to the processing in Act 3. From the above, the variable n indicates the numerical value input by the ten-keys.

On the other hand, if the button whose operation is detected in Act 6 is not a ten-keys, that is, if the button is any one of the one-touch buttons B22 to B25, the CPU 11 determines that No is taken in Act 11 and proceeds to processing in Act 17. In Act 17, the CPU 11 sets the value of the variable n to "0". Further, the CPU 11 substitutes the button number associated with the "point" button of which operation is detected in Act 6 for the variable F. After the processing in Act 17, the CPU 11 returns to the processing in Act 3.

The store clerk performs an operation of instructing the completion of registration of the commodities if registration of the commodities subject to the settlement for one transaction is completed. If the operation of instructing the completion of registration of the commodities is performed in the standby state in Act 3 to Act 7, the CPU 11 determines that Yes is taken in Act 7 and proceeds to processing in Act 18 in FIG. 3. In Act 18, the CPU 11 confirms whether or not the value in the variable F is "-1". If the value in the variable F is "-1", the CPU 11 determines that Yes is taken in Act 18 and proceeds to processing in Act 19.

In Act 19, the CPU 11 deducts n yen from the settlement amount according to the value of the variable n. The amount of money after the deduction is displayed on the touch panel for store clerk 15 as a balance separately from the settlement amount before the deduction, for example.

On the other hand, if the value of the variable F is not "-1", the CPU 11 determines that No is taken in Act 18 and proceeds to processing in Act 20. In Act 20, in accordance with the button number indicated by the variable F, the CPU 11 determines the amount of money to be deducted from the settlement amount. That is, the CPU 11 determines the fraction of the last F digits of the settlement amount as the amount of money to be deducted. For example, if the settlement amount is 2,416 yen and the value of F is 2, the CPU 11 determines the amount of the fraction of the last two digits, i.e., 16 yen, as the amount of money to be deducted from the settlement amount. If no "point" button is operated, or if the numerical value specified by the ten-key operation is "0", the value of F is "0". If the value of F is "0", the last digit is "0", and thus the amount of money to be deducted is "0" yen. In addition, it is assumed in the POS terminal 10 that the settlement amount cannot be 99 digits in the use state thereof. Therefore, if the value of variable F is 99, the last digits are 99, and thus the amount of money to be deducted is the settlement amount. The amount of money to be deducted from the settlement amount is determined according to the value of variable F determined by one of the one-touch buttons B22 to B24 being operated by the operator (store clerk). The value of variable F is determined by touching these buttons once. Accordingly, the one-touch buttons B22 to B24 are examples of instruction objects. In addition, it may be said that the one-touch button B22 is associated with a rule of determining the amount of money equivalent to the settlement amount as the amount of money to be deducted. It may be said that the one-touch button B23 is associated with a rule in which the fraction of the last two digits of the settlement amount is set as the amount of money to be deducted. Likewise, it may be said that the one-touch button B24 is associated with a rule in which the fraction of the last one digit of the settlement amount is set as the amount of money to be deducted. From the above, by performing the processing in Act 20, the computer having the CPU 11 as a central part functions as a determination unit for determining the amount of money to be deducted from the settlement amount for one transaction based on the rule previously associated with the instruction object in response to a single operation by the operator on the instruction object.

In Act 21, the CPU 11 determines whether or not the accumulated points in the point card are insufficient to execute processing. If the value obtained by converting all the accumulated points in the point card into an amount of money is less than the amount of money determined in Act 20, the CPU 11 determines that the points are insufficient. If the accumulated points in the point card are not insufficient, the CPU 11 determines that No is taken in Act 21 and proceeds to processing in Act 22.

In Act 22, the CPU 11 deducts the amount of money determined in Act 20 from the settlement amount. The amount of money after the deduction is displayed on the touch panel for store clerk 15 separately from the settlement amount before the deduction, for example, as the balance. From the above, by performing the processing in Act 22, the computer having the CPU 11 as the central part functions as the deduction unit for deducting the amount of money determined by the determination unit from the settlement amount.

After the processing in Act 19 or Act 22 is executed, the CPU 11 proceeds to processing in Act 23. In Act 23, the CPU 11 subtracts the number of points corresponding to the amount of money to be deducted from the accumulated points in Act 19 or Act 22. In the point service, there are two cases in which the accumulated points are stored in the point card itself (one case) or in the server (the other case), and the CPU 11 processes as below to subtract points. If the accumulated points are stored in the point card itself, as an example, the CPU 11 instructs the reader/writer 14 to rewrite the accumulated points stored in the point card to the number of points after the point subtraction is executed. Upon receiving this instruction, the reader/writer 14 rewrites the accumulated points stored in the point card. Through the above processing, points are subtracted from the accumulated points. If the points are stored in the server 20, the CPU 11 instructs the communication interface 18 to send a command for instructing subtraction of the points from the accumulated points to the server 20. At this time, the CPU 11 may include the accumulated points after the point subtraction is executed in the command or may include the points to be subtracted in the command. Upon receiving this instruction, the communication interface 18 transmits the command to the server 20. In response to receiving this command, the server 20 rewrites the accumulated points stored in the server 20. Through the above processing, points are subtracted from the accumulated points. The CPU 11 may also subtract points from the accumulated points by other known methods. From the above, by performing the processing in Act 23, the computer having the CPU 11 as the central part functions as a processing unit for performing processing for subtracting the points corresponding to the amount of money determined by the determination unit from the accumulated points.

On the other hand, if the accumulated points in the point card are insufficient, the CPU 11 determines that Yes is taken in Act 21 and proceeds to processing in Act 24. In Act 24, the CPU 11 performs the full amount deduction.

After the processing in Act 23 or Act 24, the CPU 11 proceeds to processing in Act 25. In Act 25, the CPU 11 performs settlement processing on the balance. The settlement processing is a well-known processing, and thus a detailed description thereof is omitted. After the processing in Act 25 is executed, the CPU 11 returns to the processing in Act 1 in FIG. 2.

According to the POS terminal 10 of the present embodiment, the POS terminal 10 displays the one-touch buttons B22 to B24. These buttons are used to respectively instruct or transmit the rules for determining the amount of money to be deducted from the settlement amount. The operator of the POS terminal 10 correspondingly specifies the rule by merely touching one of these buttons once. In addition, since the operator of the POS terminal 10 instructs the rule but does not input the amount of money itself, confirmation for the settlement amount is not required. Thus, the labor of the operator of the POS terminal 10 is reduced compared to the conventional method.

In addition, according to the POS terminal 10 of the present embodiment, the POS terminal 10 displays the one-touch buttons B22 to B24 before completion of commodity registration is instructed. Accordingly, if any one of the one-touch buttons B22 to B24 is operated before the settlement amount is determined, the POS terminal 10 according to the embodiment may determine the amount of money to be deducted in accordance with the determination of the settlement amount. On the other hand, in the POS terminal with the conventional method, the amount of money to be deducted from the settlement amount is specified by a numerical operation using a ten-keys and the like after the settlement amount for one transaction is determined. Accordingly, the POS terminal 10 according to the embodiment may shorten the time from the determination of the settlement amount to the completion of settlement compared to the conventional POS terminal.

In addition, according to the POS terminal 10 of the embodiment, the one-touch buttons B23 and B24 are used for instructing deduction of the fraction of the settlement amount such as the last digit or the last two digits thereof from the settlement amount. Accordingly, the operator of the POS terminal 10 may instruct the POS terminal 10 to deduct the fraction from the settlement amount by simply touching the one-touch button B23 or B24 once. In addition, the operator of the POS terminal 10 may specify the number of digits when instructing deduction of the fraction and it is unnecessary to input the amount of money corresponding to the fraction using the ten-keys or the like. Thus, there is no need to confirm the settlement amount therefor. As described above, in the operation of deducting the fraction from the settlement amount, the labor of the operator of the POS terminal 10 is reduced as compared to the conventional method.

In addition, according to the POS terminal 10 of the embodiment, if the value obtained by converting all the accumulated points into an amount of money is less than the settlement amount, the one-touch button B22 is used for instructing withdrawal of all points from the accumulated points. Accordingly, the operator of the POS terminal 10 instructs the POS terminal 10 to withdraw all the accumulated points by touching the one-touch button B22 once. Since the operator of the POS terminal 10 does not need to input the amount of money corresponding to all the points using the ten-keys or the like in order to withdraw all the points, there is no need to confirm the number of the accumulated points therefor. As described above, in the operation of withdrawing all points from the accumulated points, the labor of the operator of the POS terminal 10 is reduced as compared to the conventional method.

In addition, according to the POS terminal 10 of the embodiment, the "point" button is displayed in response to the operation of the "declaration" button B11. Accordingly, the store clerk knows through the touch panel for store clerk 15 that the "declaration" button B11 is operated by the shopper. That is, the store clerk knows that the shopper wants to use points by looking at the touch panel for store clerk 15.

The above embodiment may also be modified as follows. In the above embodiment, the POS terminal 10 displays one-touch buttons for the last one digit deduction and the last two digit deduction. However, the POS terminal 10 is not limited to the above, but may display the one-touch buttons for the last three digit deduction and the last four digit deduction.

In the above embodiment, the POS terminal 10 displays a "point" button in response to the operation of the "declaration" button B11 or the "declaration" button on the touch panel for store clerk. However, the CPU 11 may display the "point" button in response to the event that the data stored in the point card is read.

If the value obtained by converting all the accumulated points read from the point card into an amount of money is less than three digits, the CPU 11 may display the screen for store clerk SC2 not including the one-touch button B23. Alternatively, the CPU 11 may display the screen for store clerk SC2 not including the one-touch buttons B23 and B24. In this way, if one-touch button B23 or B24 is operated, it is not determined in the determination in Act 21 that the accumulated points are insufficient.

If the total amount of settlement of registered commodities is composed of two digits, the CPU 11 may display the screen for store clerk SC2 not including the one-touch button B23. If the total amount of settlement of the registered commodities is composed of one digit, the CPU 11 may display the screen for store clerk SC2 not including the one-touch buttons B23 and B24. For example, if the total amount of settlement of the commodities is composed of two digits, the one-touch button B23 has the same function as the one-touch button B22. Accordingly, a plurality of buttons having the same function is not displayed on the same screen. For this reason, it is possible to reduce the labor of selecting the button to be pressed by the operator.

If the value obtained by converting all the accumulated points in the point card into an amount of money is less than the fraction of the last two digits of the total amount (settlement amount) of the registered commodities, the CPU 11 may display the screen for store clerk SC2 not including the one-touch button B23. Further, if the value obtained by converting all the accumulated points in the point card into an amount of money is less than the fraction of one digit of the total amount of money of the registered commodities, the CPU 11 may display the screen for store clerk SC2 not including the one-touch buttons B23 and B24. In this way, a case, in which the accumulated points in the point card are insufficient for processing the fraction such as the last one digit or the last two digits, caused by operating the one-touch button B23 or B24 after all the commodities for one transaction are registered is not happened because such one-touch button B23 or B24 is not displayed.

The "declaration" button B11 or the "declaration" button and the "point" button displayed on the touch panel for store clerk may be realized by hardware elements such as physical buttons. In this case, the one-touch button included in the "point" button of the hardware element is an example of the instruction object. In addition, the "declaration" button B11 of the hardware element is an example of the declaration object.

The "point" button may be operated even after commodity registration is completed. In this case, the POS terminal 10 displays a "confirmation" button and the like on the touch panel for store clerk 15, for example, after Yes is taken in Act 7. Then, the CPU 11 waits for the operation of the "confirmation" button and thus does not proceed to the processing in Act 19 until the "confirmation" button is operated. If the "point" button is operated before the "confirmation" button is operated, the CPU 11 performs the same processing as in Act 11 to Act 17, and then waits again for the operation of the "confirmation" button.

The CPU 11 may also display buttons similar to the ten-keys B21 and the one-touch buttons B22 to B25 on the touch panel for customer 16. In this case, the shopper can input the amount of money to be deducted to the POS terminal 10 with less troublesome operation without notifying the store clerk of the amount of money to be deducted from the total amount of settlement of the commodities registered in the commodity list.

In Act 24, the CPU 11 may not perform the full amount deduction processing. In this case, the CPU 11 informs that the specified point subtraction processing cannot be performed because of shortage of the accumulated points by a well-known method such as displaying a message on the touch panel for store clerk 15 and the touch panel for customer 16.

In the above embodiment, the POS terminal 10 is operated by the store clerk in a face-to-face system. However, the POS terminal 10 may be operated by the shopper in a self-service system. Further, the POS terminal 10 may be operated in a semi-self-service system in which a registration unit for performing registration processing of a commodity and a settlement apparatus (settlement unit) for performing settlement processing are separated, and a registration apparatus (registration unit) is operated by the store clerk, and the settlement unit is operated by the shopper.

In this system, the store clerk serves as an operator on the registration apparatus, and the shopper (person for settlement) serves as an operator on the settlement apparatus.

Both the registration apparatus and the settlement apparatus in each checkout lane are connected through a LAN (Local Area Network) serving as an in-store network. A server is also connected to the registration apparatus and the settlement apparatus through the LAN.

For example, the registration unit performs the same processing as those in Act 1 to Act 24 in FIGS. 2 and 3, and the settlement unit performs the same processing as that in Act 25. The registration unit transmits the data and the like necessary for the processing in Act 25 to the settlement unit after the processing in Act 23 or Act 24 is executed. If the POS terminal 10 is of a semi-self-service system, a variation in which the "point" button can be operated at the settlement unit may be applied. In this case, the settlement unit displays, for example, the "point" button and the "confirmation" button. If the "point" button is operated, the CPU of the settlement unit performs the same processing as those in Act 11 to Act 17. Further, the CPU of the settlement unit performs the same processing as those in Act 20 to Act 25 if the "confirmation" button is operated.

While certain embodiments have been described, these embodiments have been presented by way of example only, and are not intended to limit the scope of the invention. Indeed, the novel methods and systems described herein may be embodied in a variety of other forms; furthermore, various omissions, substitutions and changes in the form of the methods and systems described herein may be made without departing from the scope of the invention. The accompanying claims and their equivalents are intended to cover such forms or modifications as would fall within the scope of the invention.

## Claims

1. A settlement apparatus comprising:
a determination module configured to determine an amount of money to be deducted from a settlement amount for one transaction based on a rule previously associated with an instruction object in response to a single operation on the instruction object;
a deduction module configured to deduct the deducted amount determined by the determination module from the settlement amount; and
a processing module configured to perform processing for subtracting a number of points corresponding to the deducted amount from accumulated points indicating a number of points available by a person for settlement.

2. The apparatus according to claim 1,
wherein the instruction object is an object to be operated by an operator before the settlement amount is determined.

3. The apparatus according to claim 1 or 2,
wherein the rule indicates that the deducted amount is set to a fraction having a predetermined number of digits of the settlement amount.

4. The apparatus according to any one of claims 1 to 3,
wherein the rule indicates that the deducted amount is set to the same amount as the settlement amount.

5. The apparatus according to any one of claims 1 to 4, wherein the instruction object is a touch-instruction button displayed on a touch panel and the touch-instruction button is operated by a store clerk.

6. The apparatus according to any one of claims 1 to 5, comprising a touch panel which displays a "declaration" button operated by the person for settlement,
wherein the determination module invalidates an operation on an "instruction" button which is different from the declaration until the "declaration" button is operated.

7. The apparatus according to any one of claims 1 to 6,
wherein the apparatus is a face-to-face point of sale terminal.

8. The apparatus according to any one of claims 1 to 7,
wherein the apparatus is a self-service point of sale terminal.

9. The apparatus according to any one of claims 1 to 8,
wherein the apparatus is connected to a registration apparatus through a network.

10. A method for processing a settlement amount with points, comprising:
determining an amount of money to be deducted from the settlement amount for one transaction based on a rule previously associated with an instruction object in response to a single operation on the instruction object;
deducting the deducted amount determined in the determining from the settlement amount; and
performing processing for subtracting a number of points corresponding to the deducted amount determined in the determining from accumulated points indicating a number of points available by a person for settlement.

11. The method according to claim 10,
wherein the instruction object is an object to be operated by an operator before the settlement amount is determined.

12. The method according to claim 10 or 11,
wherein the rule indicates that the deducted amount is set to a fraction having a predetermined number of digits of the settlement amount.

13. The method according to any one of claims 10 to 12,
wherein the rule indicates that the deducted amount is set to the same amount as the settlement amount.

14. The method according to any one of claims 10 to 13, wherein the instruction object is displayed and operated by a store clerk.
